# EUROPEAN PATENT SPECIFICATION

(11) **EP 3 569 841 B1**
(45) Date of publication and mention of the grant of the patent: **23.10.2024**
(21) Application number: 19173765.9
(22) Date of filing: 10.05.2019
(51) Int. Cl.: F02C 6/08, F01D 25/16, F02C 7/18, F02K 3/06, F02K 3/115, F01D 17/14, F01D 9/06

(54) **INTERCOOLED COOLING AIR WITH HEAT EXCHANGER PACKAGING**
ZWISCHENGEKÜHLTE KÜHLLUFT MIT WÄRMETAUSCHERGEHÄUSE
AIR DE REFROIDISSEMENT REFROIDI AVEC CONDITIONNEMENT D'ÉCHANGEUR DE CHALEUR

(30) Priority: 14.05.2018 US 201815978517
(43) Date of publication of application: 20.11.2019
(73) Proprietor: RTX Corporation, Farmington, CT 06032 (US)
(72) Inventor: SUCIU, Gabriel L., Glastonbury, CT 06033 (US); CHANDLER, Jesse M., South Windsor, CT 06074 (US); MERRY, Brian D., Andover, CT 06232 (US); SNAPE, Nathan, Tolland, CT 06084 (US)
(74) Representative: Dehns

(56) References cited:
- EP-A1- 3 109 435
- EP-A2- 1 876 328
- GB-A- 1 244 340
- US-A- 5 123 242
- US-A- 6 134 880
- US-A1- 2017 307 311

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures.

A prior art gas turbine engine, having the features of the preamble of claim 1 is provided in EP 3109435 A1.

### SUMMARY

In an aspect of the present invention, a gas turbine engine is provided, as set forth in claim 1.

In another embodiment according to any of the previous embodiments, the second leg is positioned to be upstream of the first leg relative to a flow of bypass air between the core housing and the fan housing.

In another embodiment according to any of the previous embodiments, the first and second legs are provided with structure to increase a cross-sectional surface area of an outer peripheral surface of the first and second legs.

In another embodiment according to any of the previous embodiments, the turbine section drives a gear. The gear further drives the cooling compressor.

In another embodiment according to any of the previous embodiments, the gear also drives an accessory gearbox.

In another embodiment according to any of the previous embodiments, there is an upper bifurcation and a lower bifurcation, and the heat exchanger is in the upper bifurcation.

In another embodiment according to any of the previous embodiments, there is an upper bifurcation and a lower bifurcation, and the heat exchanger is in the lower bifurcation.

In another embodiment according to any of the previous embodiments, the bifurcations extend generally to sides of the core housing and the fan housing and the heat exchanger is in one of the bifurcations.

In another embodiment according to any of the previous embodiments, the valve is in the air inlet.

In another embodiment according to any of the previous embodiments, the valve has a pair of flaps which can pivot outwardly to a closed position and pivot

toward each other to an open position, and the control controls the position of said flaps.

In another embodiment according to any of the previous embodiments, the valve is mounted in the air outlet.

In another embodiment according to any of the previous embodiments, the valve includes a flap valve pivoting between a position at which it extends outwardly into a bypass duct and to a closed position at which it blocks flow through the outlet.

These and other features may be best understood from the following drawings and specification.

### BRIEF DESCRIPTION OF THE DRAWINGS

Figure 1 schematically shows an embodiment of a gas turbine engine.
Figure 2 shows a prior art engine.
Figure 3A shows one example engine.
Figure 3B shows a detail.
Figure 4 is a graph illustrating increasing temperatures of a tapped air against the work required.
Figure 5 shows a detail of an example of an engine.
Figure 6 shows a further detail of the example engine of Figure 5.
Figure 7A schematically shows a feature of example engine of Figure 5.
Figure 7B shows an alternative position.
Figure 8A shows a detail of the example engine of Figure 5.
Figure 8B shows a further optional detail.
Figure 8C shows a further optional detail.
Figure 9 shows a further detail of the example engine of Figure 5.
Figure 10A shows a valve arrangement in a first position.
Figure 10B shows a Figure 10A valve in a distinct position.
Figure 11 shows another valve embodiment.

### DETAILED DESCRIPTION

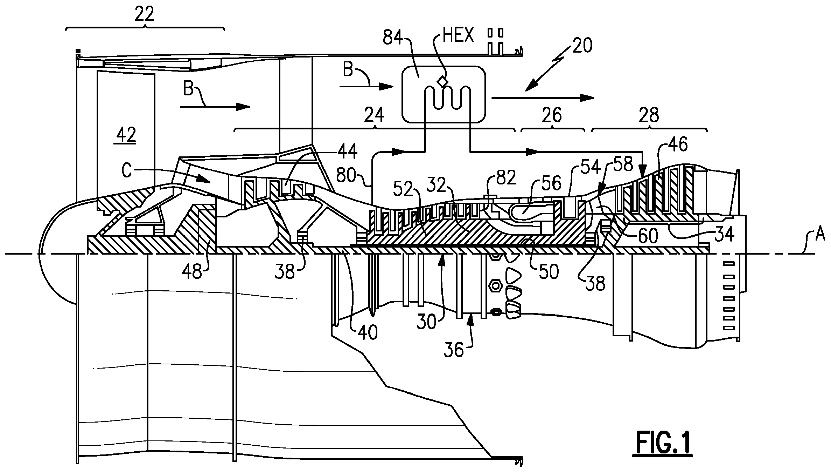

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24. Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10668m). The flight condition of 0.8 Mach and 35,000 ft. (10668m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5} (where °R = K x 9/5). The "Low corrected fan tip speed", as disclosed herein according to one non-limiting embodiment, is less than about 1150 ft/second (351 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the discharge 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B.

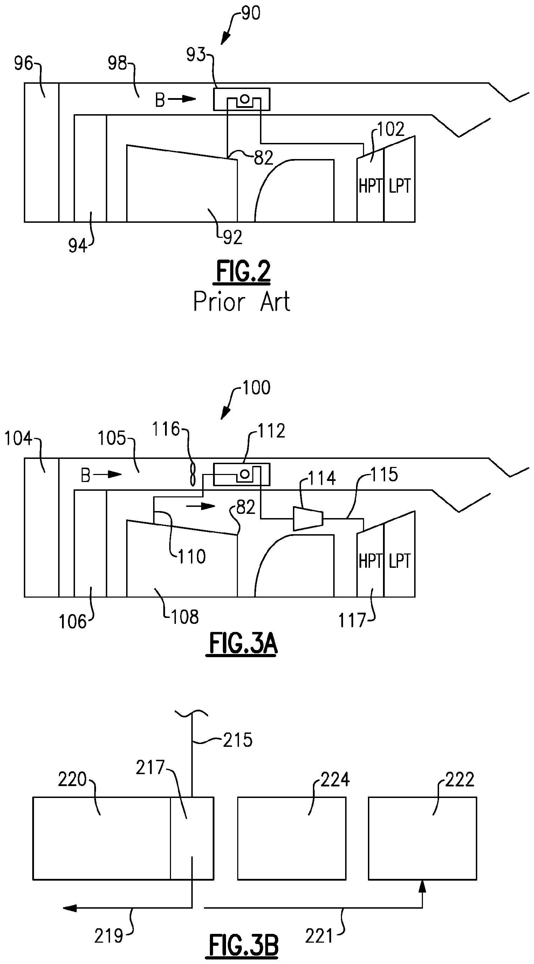

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point, or discharge 82 of the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 92 is known as station 3. The temperature T3 and pressure P3 are both very high.

In future engines, T3 levels are expected to approach greater than or equal to 1350°F (732°C). Current heat exchanger technology is becoming a limiting factor as they are made of materials, manufacturing, and design capability which have difficulty receiving such high temperature and pressure levels.

Figure 3A shows an engine 100 coming within the scope of this disclosure. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high pressure turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 may be positioned upstream of the heat exchanger 112 as illustrated. The main fan 104 may not provide sufficient pressure to drive sufficient air across the heat exchanger 112. The auxiliary fan will ensure there is adequate airflow in the circumferential location of the heat exchanger 112. The auxiliary fan 116 may allow the heat exchanger to be made smaller.

In one embodiment, the auxiliary fan may be variable speed, with the speed of the fan varied to control the temperature of the air downstream of the heat exchanger 112. As an example, the speed of the auxiliary fan may be varied based upon the operating power of the overall engine.

Figure 3B shows an alternative system. In Figure 3B, air, at 215, downstream of the cooling compressor 114, may be delivered through a vane 217 which is part of a diffuser downstream of a high pressure compressor 220. The air is shown moving at 219 to cool the high pressure compressor 220. Optionally, the air at 221 is delivered to cool the high pressure turbine 222. An intermediate combustor 224 is shown. In embodiments, the air may flow to both 219 and 221, or either. Generically, the airflow downstream of the cooling compressor cools a rotating component, which may be the high pressure compressor, or the high pressure turbine.

If the compressor is cooled, this cooling air will reduce metal temperature arising from the compression process. It is known that the pressures and temperatures seen by the high pressure compressor raises challenges at elevated temperatures and because of thermal gradients as the pressures and temperatures increase. Providing the cooling air at 219 to the rear section of the high pressure compressor cools disks and hubs in the high pressure compressor, beneficially.

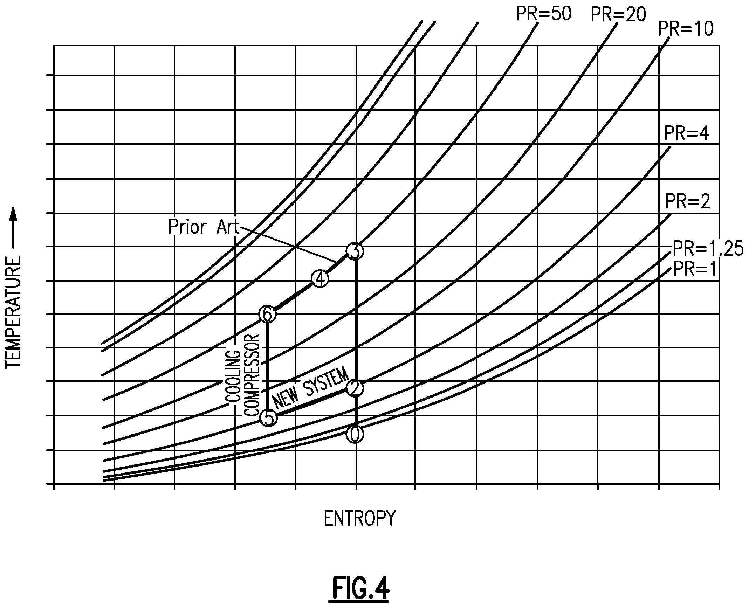

Referring to Figure 4, a temperature/entropy diagram illustrates that a lower level of energy is spent to compress air of a lower temperature to the desired P3 pressure level. Cooler air requires less work to compress when compared to warmer air. Accordingly, the work required to raise the pressure of the air drawn from an early stage of the compressor section is less than if the air were compressed to the desired pressure within the compressor section. Therefore, high pressure air at P3 levels or higher can be obtained at significantly lower temperatures than T3. As shown in Figure 4, to reach a particular pressure ratio, 50 for example, the prior system would move from point 2 to point 3, with a dramatic increase in temperature. However, the disclosed or new system moves from point 2 to point 5 through the heat exchanger, and the cooling compressor then compresses the air up to point 6. As can be appreciated, point 6 is at a much lower temperature.

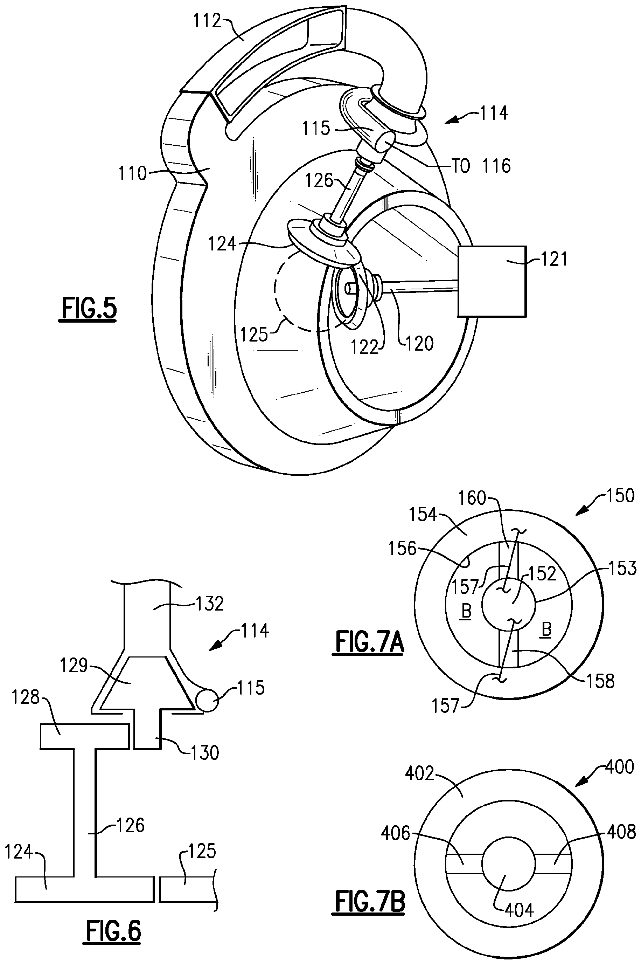

Figure 5 shows a detail of compressor 114 having an outlet into conduit 115. A primary tower shaft 120 drives an accessory gearbox 121. The shaft 126 drives a compressor rotor within the compressor 114. The shafts 120 and 126 may be driven by a bull gear 125 driven by a turbine rotor, and in one example, with a high pressure compressor rotor.

Figure 6 shows an example wherein a gear 128 is driven by the shaft 126 to, in turn, drive a gear 130 which drives a compressor impeller 129. An input 132 to the compressor impeller 129 supplies the air from the tap 110. The air is compressed and delivered into the outlet conduit 115.

By providing a gear ratio increase between the compressor impeller 129 and the high spool bull gear 125, the compressor impeller may be driven to operate an optimum speed. As an example, the gear increase may be in a range of 5:1 - 8:1, and in one embodiment, 6:1.

Details of the engine, as set forth above, may be found in U.S. Patent Application Serial No. 14/695,578.

Figure 7A shows a feature of gas turbine engine 150. A core housing 152 is shown having a radially outer surface 153. A nacelle or fan housing 154 has a radially inner surface 156. A bypass duct receiving bypass air B is defined between the surfaces 153 and 156. As known, elements, such as electronic or hydraulic connections (157, shown schematically), must extend between the housings 152 and 154. Thus, so-called bifurcation ducts 158 and 160 are formed between the two housings. Bifurcation duct 158 would be at a vertically lower location while bifurcation duct 160 would be at a vertically upper location when the engine is mounted on an aircraft.

Figure 7B shows an alternative bifurcation duct arrangement 400. Fan housing 402 surrounds the core engine 404. Bifurcations 406 and 408 extend generally at 3:00 o'clock and 9:00 o'clock directions as opposed to the 6:00/12:00 o'clock directions of Figure 7A. Figure 7A embodiment may be utilized if an engine is mounted on a wing, whereas, the Figure 7B embodiment may be utilized for fuselage mounted engines.

The teachings of this disclosure could extend to packaging a heat exchanger in any of these four locations.

A challenge with the engine defined in Figures 1 and 6 is that placing the heat exchanger in the path of the bypass air blocks the airflow somewhat. There is already blockage from the bifurcation ducts. Thus, the additional blockage may be undesirable for some applications.

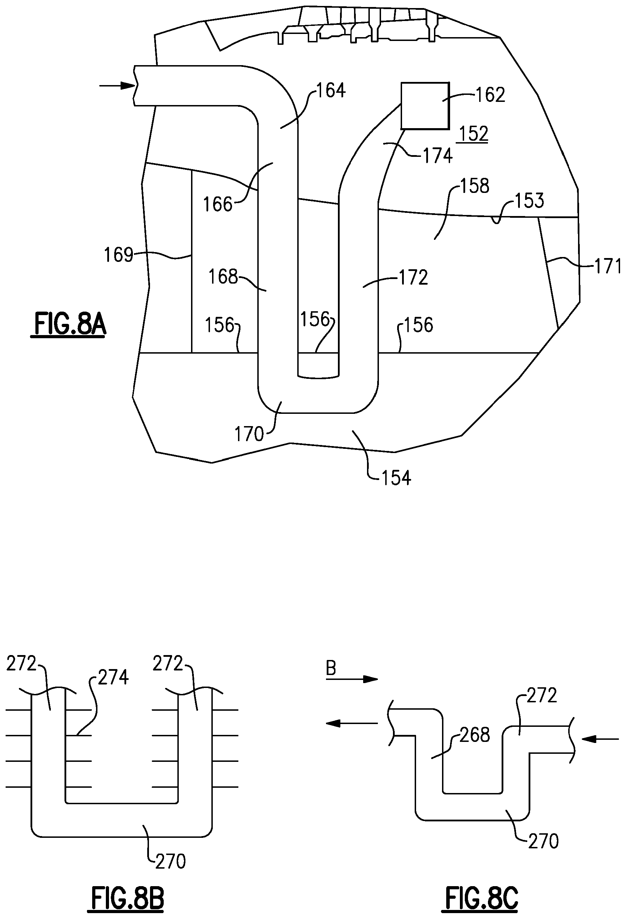

As shown in Figure 8A, the heat exchanger 164 has a first leg portion 166 received within the core housing 152, and extending to a leg portion 168 within the bifurcation duct 158. A turning portion 170 is actually outward of the surface 156 and within the fan housing 154. The turning portion 170 returns the flow into a second leg 172, which extends back radially toward a center of the engine to an outlet 174. Outlet 174 communicates downstream to the cooling compressor 162, which is also within the core housing.

Stated in one way, air is delivered into a heat exchanger first leg 168 within the core housing. The leg extends outwardly of the core housing and into the at least one bifurcation duct 158, and to a second leg 172 extending back toward a center axis of the engine, and back into the core housing to deliver the air to a cooling compressor 162.

The heat exchanger 164 can be said to communicate air from within core housing 152, into bifurcation duct 158, then into fan housing 154. The air then flows back inwardly into bifurcation duct 158, the core housing 152 and to a high pressure turbine.

Figure 8A also shows an upstream end 169 and downstream end 171 of the bifurcation duct which receives the heat exchanger.

Figure 8B discloses an embodiment according to the invention wherein there are a plurality of legs 272 extending through the bifurcation duct to the turning portion 270. In this embodiment, the legs 272 may be discrete heat exchanger bodies leading into a common header 270. It should be understood that if the legs 272 are the inlets, there also are a plurality of similar outlets. In addition, fins 274 are shown schematically to increase the effective area of the outer surface of the legs 272. Any number of other ways of increasing the surface area may be utilized.

Figure 8C shows an embodiment wherein the inlet 272 leads to the turning portion 270, and then to the outlet 268. As illustrated by the bypass flow B, the outlet leg 268 is upstream of the inlet leg 272. In this manner, the air passing across leg 268 has not been heated by the hotter air in leg 272.

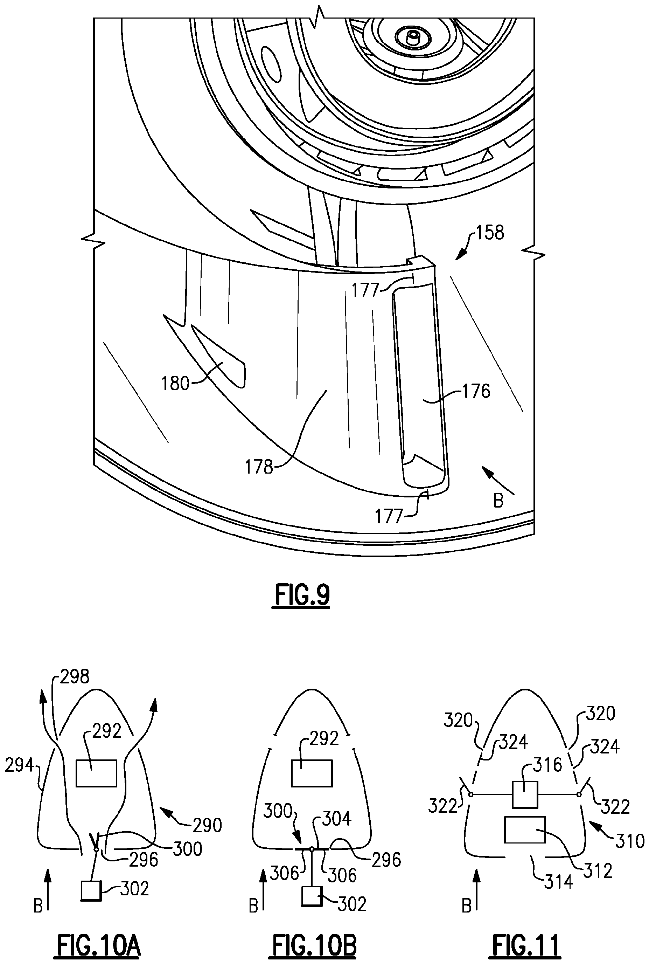

Figure 9 shows the bifurcation duct 158 having side walls 178. In the prior art, the bifurcation duct need not allow airflow. However, once the heat exchanger 164 is mounted within the bifurcation duct, air desirably passes over the heat exchanger. Thus, an enlarged opening 176 is formed on an upstream end and one or more outlets 180 are formed on a downstream end.

By placing the heat exchanger within the bifurcation duct, the restriction to flow caused by the inclusion of the heat exchanger is dramatically reduced.

Figure 10A shows a bifurcation embodiment 290 having a heat exchanger 292. A body 294 includes a forward inlet 296, similar to inlet 176, and rear outlets 298, similar to outlet 180. As shown, a valve 300 is open in this position to the inlet 296 and through the outlets 298. A control 302 can control the valve.

As shown in Figure 10B, control 302 has now moved flaps 306 on the valve 300 to a closed position at which it blocks flow into the inlet. This will occur when further cooling of the heat exchanger 292 is not needed. This will provide more efficient use of the bypass air as the bypass air will not be directed into the bifurcation duct when cooling is not necessary.

Figure 11 shows an embodiment 310 wherein a heat exchanger 312 is positioned within the bifurcation duct. The inlet 314 does not receive a valve, but rather the outlets 320 receives the valve 322. In this embodiment, the control 316 pivots the valves 322 as flaps between the illustrated open position, at which airflow is allowed, into a closed position, shown in phantom, at which airflow is prevented. This would operate in a similar manner to the Figure 10A/10B embodiment.

Although an example embodiment has been disclosed, a worker of ordinary skill in this art would recognize that certain modifications would come within the scope of the following claims.

## Claims

1. A gas turbine engine (20; 150) comprising;
a plurality of rotating components housed within a compressor section (24) and a turbine section (28);
a tap (110) connected to said compressor section (24), a heat exchanger (112; 164; 292; 312) connected downstream of said tap (110), and a cooling compressor (114; 162) connected downstream of said heat exchanger (112; 164; 292; 312), and said cooling compressor (114; 162) connected to deliver air to at least one of said rotating components; and
a core housing (152) having an outer peripheral surface (153) and a fan housing (154) defining an inner peripheral surface (156), at least one bifurcation duct (158, 160; 406, 408) extending between said outer peripheral surface (153) to said inner peripheral surface (156), and said heat exchanger (112; 164; 292; 312) disposed within said at least one bifurcation duct (158, 160; 406, 408),
wherein air is delivered into a heat exchanger first leg (168) within said core housing (152), the first leg (168) extending outwardly of said core housing (152) and into said at least one bifurcation duct (158, 160; 406, 408), and to a second leg (172) extending back toward a center axis (A) of the engine (20; 150), and back into said core housing (152) to deliver the air to said cooling compressor (114; 162), and
wherein there is an air inlet (176; 296; 314) for air to pass over said heat exchanger (112; 164; 292; 312) in said at least one bifurcation duct (158, 160; 406, 408) and an air outlet (180; 298; 320),
**characterized in that**:
there is a valve (300; 322) in at least one of said air inlet (176; 296; 314) and air outlet (180; 298; 320), and
there are a plurality of first legs (168) and a plurality of second legs (172), wherein said plurality of first legs (168) and said plurality of second legs (172) communicate with a common header (270) to turn air from the first legs to the second legs.

2. The gas turbine engine as set forth in claim 1, wherein said second leg (172) is positioned to be upstream of said first leg (168) relative to a flow of bypass air (B) between said core housing (152) and said fan housing (154).

3. The gas turbine engine as set forth in claim 1 or 2, wherein said first and second legs (168, 172) are provided with structure to increase a cross-sectional surface area of an outer peripheral surface (153) of said first and second legs (168, 172).

4. The gas turbine engine as set forth in any preceding claim, wherein said turbine section (28) driving a gear (125), said gear (125) further driving said cooling compressor (114; 162).

5. The gas turbine engine as set forth in claim 4, wherein said gear (125) also driving an accessory gearbox (121).

6. The gas turbine engine as set forth in any preceding claim, wherein there is an upper bifurcation duct (160) and a lower bifurcation duct (158), and wherein said heat exchanger (112; 164; 292; 312) is in said upper bifurcation duct (160).

7. The gas turbine engine as set forth in any of claims 1 to 5, wherein there is an upper bifurcation duct (160) and a lower bifurcation duct (158), and wherein said heat exchanger (112; 164; 292; 312) is in said lower bifurcation duct (158).

8. The gas turbine engine as set forth in any of claims 1 to 5, wherein said at least one bifurcation duct comprises a plurality of bifurcation ducts (406, 408) extending generally to sides of said core housing (152) and said fan housing (154) and said heat exchanger (112; 164; 292; 312) is in one of said bifurcations ducts (406, 408).

9. The gas turbine engine as set forth in any preceding claim, wherein said valve (300) is in said air inlet (296), and said valve (300) has a pair of flaps (306) which can pivot outwardly to a closed position and pivot toward each other to an open position, and a control (302) controlling the position of said flaps (306).

10. The gas turbine engine as set forth in claim 9, wherein said valve (322) is mounted in said air outlet (320), and said valve (322) includes a flap valve pivoting between a position at which it extends outwardly into a bypass duct and to a closed position at which it blocks flow through said outlet (320).

## Patentansprüche

1. Gasturbinentriebwerk (20; 150), Folgendes umfassend:
eine Vielzahl rotierender Komponenten, die in einem Kompressorabschnitt (24) und einem Turbinenabschnitt (28) untergebracht ist;
einen Abgriff (110), der mit dem Kompressorabschnitt (24) verbunden ist, einen Wärmetauscher (112; 164; 292; 312), der stromabwärts des Abgriffs (110) verbunden ist, und einen Kühlkompressor (114; 162), der stromabwärts des Wärmetauschers (112; 164; 292; 312) verbunden ist, und wobei der Kühlkompressor (114; 162) so verbunden ist, dass er mindestens einer der rotierenden Komponenten Luft zuführt; und
ein Kerngehäuse (152) mit einer äußeren Umfangsfläche (153) und ein Lüftergehäuse (154), das eine innere Umfangsfläche (156) definiert, mindestens einen Gabelungskanal (158, 160; 406, 408), der sich zwischen der äußeren Umfangsfläche (153) und der inneren Umfangsfläche (156) erstreckt, und den Wärmetauscher (112; 164; 292; 312), der innerhalb des mindestens einen Gabelungskanals (158, 160; 406, 408) angeordnet ist,
wobei Luft in einen ersten Schenkel (168) des Wärmetauschers innerhalb des Kerngehäuses (152), wobei sich der erste Schenkel (168) nach außen aus dem Kerngehäuse (152) und in den mindestens einen Gabelungskanal (158, 160; 406, 408) erstreckt, und einem zweiten Schenkel (172), der sich zurück in Richtung einer Mittelachse (A) des Motors (20; 150) und zurück in das Kerngehäuse (152) erstreckt, um die Luft dem Kühlkompressor (114; 162) zuzuführen, zugeführt wird und
wobei ein Lufteinlass (176; 296; 314) für die Luft, die über den Wärmetauscher (112; 164; 292; 312) in dem mindestens einen Gabelungskanal (158, 160; 406, 408) strömen kann, und ein Luftauslass (180; 298; 320) vorhanden sind,
**dadurch gekennzeichnet, dass**:
ein Ventil (300; 322) in mindestens einem von dem Lufteinlass (176; 296; 314) und dem Luftauslass (180; 298; 320) vorhanden ist und
eine Vielzahl von ersten Schenkeln (168) und eine Vielzahl von zweiten Schenkeln (172) vorhanden sind, wobei die Vielzahl von ersten Schenkeln (168) und die Vielzahl von zweiten Schenkeln (172) mit einem gemeinsamen Verteiler (270) kommunizieren, um Luft von den ersten Schenkeln zu den zweiten Schenkeln zu leiten.

2. Gasturbinentriebwerk nach Anspruch 1, wobei der zweite Schenkel (172) so positioniert ist, dass er in Bezug auf einen Strom von Bypass-Luft (B) zwischen dem Kerngehäuse (152) und dem Lüftergehäuse (154) stromaufwärts von dem ersten Schenkel (168) positioniert ist.

3. Gasturbinentriebwerk nach Anspruch 1 oder 2, wobei der erste und der zweite Schenkel (168, 172) mit einer Struktur bereitgestellt sind, um eine Querschnittsoberfläche einer äußeren Umfangsoberfläche (153) des ersten und des zweiten Schenkels (168, 172) zu vergrößern.

4. Gasturbinentriebwerk nach einem der vorhergehenden Ansprüche, wobei der Turbinenabschnitt (28) ein Zahnrad (125) antreibt, wobei das Zahnrad (125) wiederum den Kühlkompressor (114; 162) antreibt.

5. Gasturbinentriebwerk nach Anspruch 4, wobei das Zahnrad (125) auch ein Hilfsgetriebe (121) antreibt.

6. Gasturbinentriebwerk nach einem der vorhergehenden Ansprüche, wobei ein oberer Gabelungskanal (160) und ein unterer Gabelungskanal (158) vorhanden sind und wobei sich der Wärmetauscher (112; 164; 292; 312) in dem oberen Gabelungskanal (160) befindet.

7. Gasturbinentriebwerk nach einem der Ansprüche 1 bis 5, wobei ein oberer Gabelungskanal (160) und ein unterer Gabelungskanal (158) vorhanden sind und wobei sich der Wärmetauscher (112; 164; 292; 312) in dem unteren Gabelungskanal (158) befindet.

8. Gasturbinentriebwerk nach einem der Ansprüche 1 bis 5, wobei der mindestens eine Gabelungskanal eine Vielzahl von Gabelungskanälen (406, 408) umfasst, die sich im Allgemeinen zu Seiten des Kerngehäuses (152) und des Lüftergehäuses (154) erstreckt, und wobei sich der Wärmetauscher (112; 164; 292; 312) in einem der Gabelungskanäle (406, 408) befindet.

9. Gasturbinentriebwerk nach einem der vorhergehenden Ansprüche, wobei sich das Ventil (300) in dem Lufteinlass (296) befindet und das Ventil (300) ein Paar Klappen (306), das nach außen in eine geschlossene Stellung geschwenkt und aufeinander zu in eine geöffnete Stellung geschwenkt werden kann, sowie eine Steuerung (302), die die Stellung der Klappen (306) steuert, aufweist.

10. Gasturbinentriebwerk nach Anspruch 9, wobei das Ventil (322) in dem Luftauslass (320) montiert ist und das Ventil (322) ein Klappenventil beinhaltet, das zwischen einer Position, in der es sich nach außen in einen Bypass-Kanal erstreckt, und einer geschlossenen Position, in der es den Durchfluss durch den Auslass (320) blockiert, schwenkbar ist.

## Revendications

1. Moteur à turbine à gaz (20 ; 150), comprenant:
une pluralité de composants rotatifs logés à l'intérieur d'une section de compresseur (24) et d'une section de turbine (28) ;
un robinet (110) relié à ladite section de compresseur (24), un échangeur de chaleur (112 ; 164 ; 292 ; 312) relié en aval dudit robinet (110), et un compresseur de refroidissement (114 ; 162) relié en aval dudit échangeur de chaleur (112 ; 164 ; 292 ; 312), et ledit compresseur de refroidissement (114 ; 162) relié pour délivrer de l'air à au moins un desdits composants rotatifs ; et
un boîtier central (152) ayant une surface périphérique extérieure (153) et un boîtier de ventilateur (154) définissant une surface périphérique intérieure (156), au moins un conduit de bifurcation (158, 160 ; 406, 408) se prolongeant entre ladite surface périphérique extérieure (153) et ladite surface périphérique intérieure (156), et ledit échangeur de chaleur (112 ; 164 ; 292 ; 312) disposé à l'intérieur dudit au moins un conduit de bifurcation (158, 160 ; 406, 408),
dans lequel l'air est délivré dans une première branche (168) d'échangeur de chaleur à l'intérieur dudit boîtier central (152), la première branche (168) se prolongeant vers l'extérieur dudit boîtier central (152) et dans ledit au moins un conduit de bifurcation (158, 160 ; 406, 408), et vers une seconde branche (172) se prolongeant vers l'arrière vers un axe central (A) du moteur (20 ; 150), et vers l'arrière dans ledit boîtier central (152) pour délivrer l'air audit compresseur de refroidissement (114 ; 162), et
dans lequel il existe une entrée d'air (176 ; 296 ; 314) pour que l'air passe sur ledit échangeur de chaleur (112 ; 164 ; 292 ; 312) dans ledit au moins un conduit de bifurcation (158, 160 ; 406, 408) et une sortie d'air (180 ; 298 ; 320),
**caractérisé en ce que** :
il existe une soupape (300 ; 322) dans au moins l'une desdites entrée d'air (176 ; 296 ; 314) et sortie d'air (180 ; 298 ; 320), et
il existe une pluralité de premières branches (168) et une pluralité de secondes branches (172), dans lequel ladite pluralité de premières branches (168) et ladite pluralité de secondes branches (172) communiquent avec un collecteur commun (270) pour faire tourner l'air des premières branches vers les secondes branches.

2. Moteur à turbine à gaz selon la revendication 1, dans lequel ladite seconde branche (172) est positionnée pour être en amont de ladite première branche (168) par rapport à un flux d'air de dérivation (B) entre ledit boîtier central (152) et ledit boîtier de ventilateur (154).

3. Moteur à turbine à gaz selon la revendication 1 ou 2, dans lequel lesdites première et seconde branches (168, 172) sont dotées d'une structure pour augmenter une surface de section transversale d'une surface périphérique extérieure (153) desdites première et seconde branches (168, 172).

4. Moteur à turbine à gaz selon une quelconque revendication précédente, dans lequel ladite section de turbine (28) entraîne un engrenage (125), ledit engrenage (125) entraînant également ledit compresseur de refroidissement (114 ; 162).

5. Moteur à turbine à gaz selon la revendication 4, dans lequel ledit engrenage (125) entraîne également une boîte de vitesses d'accessoires (121).

6. Moteur à turbine à gaz selon une quelconque revendication précédente, dans lequel il existe un conduit de bifurcation supérieur (160) et un conduit de bifurcation inférieur (158), et dans lequel ledit échangeur de chaleur (112 ; 164 ; 292 ; 312) se trouve dans ledit conduit de bifurcation supérieur (160) .

7. Moteur à turbine à gaz selon l'une quelconque des revendications 1 à 5, dans lequel il existe un conduit de bifurcation supérieur (160) et un conduit de bifurcation inférieur (158), et dans lequel ledit échangeur de chaleur (112 ; 164 ; 292 ; 312) se trouve dans ledit conduit de bifurcation inférieur (158).

8. Moteur à turbine à gaz selon l'une quelconque des revendications 1 à 5, dans lequel ledit au moins un conduit de bifurcation comprend une pluralité de conduits de bifurcation (406, 408) se prolongeant généralement vers des côtés dudit boîtier central (152) et dudit boîtier de ventilateur (154) et ledit échangeur de chaleur (112 ; 164 ; 292 ; 312) se trouve dans l'un desdits conduits de bifurcation (406, 408).

9. Moteur à turbine à gaz selon une quelconque revendication précédente, dans lequel ladite soupape (300) se trouve dans ladite entrée d'air (296), et ladite soupape (300) comporte une paire de clapets (306) qui peuvent pivoter vers l'extérieur vers une position fermée et pivoter l'un vers l'autre vers une position ouverte, et une commande (302) commandant la position desdits clapets (306).

10. Moteur à turbine à gaz selon la revendication 9, dans lequel ladite soupape (322) est montée dans ladite sortie d'air (320), et ladite soupape (322) comporte une soupape à clapet pivotant entre une position dans laquelle elle se prolonge vers l'extérieur dans un conduit de dérivation et une position fermée dans laquelle elle bloque l'écoulement à travers ladite sortie (320).
